Europäisches Patentamt

European Patent Office

Office européen des brevets

(11) Publication number: **0 248 681 B1**

(12) **EUROPEAN PATENT SPECIFICATION**

(45) Date of publication of patent specification: **16.12.92**   (51) Int. Cl.⁵: **C11D 3/08,** C11D 3/10, C11D 3/43

(21) Application number: **87305018.1**

(22) Date of filing: **05.06.87**

(54) Method of cleaning the interior of polymerization reactor.

(30) Priority: **06.06.86 JP 132575/86**

(43) Date of publication of application:
**09.12.87 Bulletin 87/50**

(45) Publication of the grant of the patent:
**16.12.92 Bulletin 92/51**

(84) Designated Contracting States:
**BE FR GB**

(56) References cited:
EP-A- 0 033 601
DE-A- 1 467 629
US-A- 3 634 338

**CHEMICAL ABSTRACTS, vol. 99, no. 6, August 1983, page 12, abstract no. 38980b, Columbus, Ohio, US**

(73) Proprietor: **Kanegafuchi Chemical Industry Co., Ltd.**
**2-4 Nakanoshima 3-chome**
**Kita-ku Osaka-shi Osaka-fu(JP)**

(72) Inventor: **Komabashiri, Takamichi**
**2048-19, Hozaki Iho-cho**
**Takasago-shi Hyogo(JP)**
Inventor: **Mitani, Toragoro**
**829-4, Sone-cho**
**Takasago-shi Hyogo(JP)**
Inventor: **Yamauchi, Hiroaki**
**830-30, Ikeda Onoe-cho**
**Kakogawa-shi Hyogo(JP)**
Inventor: **Yasui, Hideo**
**11-30, 3-chome Utashikiyama Tarumi-ku**
**Kobe-shi Hyogo(JP)**

(74) Representative: **West, Alan Harry et al**
**R.G.C. Jenkins & Co. 26 Caxton Street**
**London SW1H 0RJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 248 681 B1

## Description

This invention relates to a method of cleaning the interior of a polymerization reactor. More particularly, it relates to a method of removing scale or other material deposited on the inside of a polymerization reactor used in emulsion polymerization or suspension polymerization.

Plant cleaning techniques include mechanical cleaning and chemical cleaning. Mechanical cleaning includes high-pressure jet cleaning, blast cleaning, and pig cleaning. Chemical cleaning includes alkali cleaning, acid cleaning, and emulsion cleaning. Alkali cleaning is generally used for removing oils and fats by use of e.g. caustic soda or sodium carbonate. Acid cleaning is usually used for cleaning and removing inorganic scale; acids like hydrochloric acid, sulfuric acid, nitric acid or phosphoric acid can be used. Emulsion cleaning is adapted to cleaning and removing oils and fats with a surfactant

To remove the scale deposited on the interior of the polymerization reactor such as the inside surface of the reactor, an agitator, and baffle-plates, there is generally used mechanical cleaning, particularly high-pressure jet cleaning. It is usually difficult, however, for high-pressure jet cleaning to remove scale completely. In addition, to apply a scale inhibitor having a chelating function to the inside surface of a polymerization reactor, it is necessary first to clean completely the inside surface of the reactor. High-pressure jet cleaning cannot be used for such a purpose since it does not completely remove scale.

A procedure for cleaning polymerization reactors contaminated with carboxylated polymers is described in Chemical Abstracts 99 (August 1983) No. 6, 38980b (derived from JP-A-57147501). In that procedure, polymerization reactors contaminated with carboxy group-containing polymers are cleaned with polyvalent metal salts, surfactants and water. In an example, 15 gallons (57 litres) 20% sodium silicate, 100 lbs (45 kg) aluminium triacetate, 8 lbs (3.6 kg) of a mixture of lauryl sulphate and alkyl aryl phosphonate, and water were charged to a reactor contaminated with 200 lbs (90 kg) cross-linked poly(acrylic acid), stirred for six hours at 150°F (66°C) and discharged. Similar cleaning with 50 lbs (23 kg) aluminium triacetate, 2 lbs (0.9 kg) surfactants and water for six hours, 5 gallons (19 litres) 20% sodium silicate and water for 6 hours, and 2 lbs (0.9 kg) surfactants, 2 gallons (7.6 litres) 20% sodium silicate, and water for 6 hours were repeated, and the reactor was cleaned completely with forced water.

The present invention seeks to achieve satisfactory cleaning through heating and optionally agitating, with a chemical detergent system comprising a soap builder, an alkali agent, an aqueous solution or dispersion of a surfactant, and an organic solvent and/or a polymerizable monomer, as such or in the presence of a plastics packing material such as tellerettes.

According to the invention, there is provided a method of cleaning the interior of a polymerization reactor, for example the inside surface, agitator, and baffle-plates, which has been used for the emulsion or suspension polymerization of one or more monomers in the presence of an initiator, the method comprising contacting the interior of the reactor with a chemical detergent system comprising:

from 0.01 to 50 w/v% of at least one soap builder,

from 0.01 to 30 w/v% of at least one alkali agent,

from 0.01 to 10 w/v% of a surfactant as an aqueous solution or dispersion thereof and

an organic solvent and/or polymerizable monomer in ratio of solvent/monomer to aqueous detergent solution layer of 1:0.01 to 10,

cleaning being carried out at 100°C or less for 0.1 to 96 hours in a first cleaning step and for 0.1 to 72 hours in a second cleaning step.

The apparatus intended for cleaning by the method of the present invention is a polymerization reactor which has been used in emulsion or suspension polymerization. Preferred for cleaning are those reactors used for emulsion polymerization of a single acrylic ester monomer or methacrylic ester monomer or a mixture thereof, or for emulsion polymerization of butadiene or styrene and/or substituted styrene. The substituted styrenes includes α-methylstyrene, vinyltoluene and ortho-chlorostyrene. Other reactors which can be cleaned include polymerization reactors for manufacturing polyvinyl chloride resin by suspension polymerization, for manufacturing paste resin of polyvinyl chloride, for manufacturing polystyrene beads by suspension polymerization, and for manufacturing copolymer of acrylonitrile and vinyl chloride by emulsion polymerization.

The soap builder used in the invention includes an alkali builder. Examples of the soap builder are sodium metasilicate, sodium orthosilicate, sodium silicate, sodium orthophosphate, sodium pyrophosphate, sodium tripolyphosphate, sodium hexametaphosphate, and potassium metasilicate.

The alkali agent includes caustic soda, sodium carbonate, sodium bicarbonate, caustic potash, potassium carbonate, and potassium bicarbonate.

The surfactant is preferably excellent in wet permeability, emulsifiability force, and dispersibility, and has a strong detergency. More preferably, it has an excellent biodegradability. Examples of surfactants

2

satisfying such requirements are (1) anionic surfactants such as fatty acid salts like semihardened potassium soap of beef tallow fatty acid, semihardened sodium soap of beef tallow fatty acid, potassium soap of oleic acid, potassium soap of castor oil, sodium soap of stearic acid, solid bar or solid flake sodium soap of mixed fatty acid; naphtalenesulfonic acid-formaldehyde condensate such as sodium salt of $\beta$-naphthalenesulfonic acid-formaldehyde condensate; alkylnaphthalenesulfonate such as sodium alkylnaphthalenesulfonate; alkylsulfosuccinate such as sodium dialkyl-sulfosuccinate; and alkyldiphenyl ether disulfonate such as sodium alkyldiphenyl ether disulfonate: (2) nonionic surfactants such as polyoxyethylene alkyl ether like polyoxyethylene nonylphenyl ether and polyoxyethylene octylphenyl ether, and polyoxyethylene derivatives: and (3) ampholytic surfactants such as lauryl betaine and lauryldimethylamine oxide.

Among these, particularly preferable are anionic surfactants and nonionic surfactants.

The organic solvent and polymerizable monomer decrease the deposition of scale on the walls by swelling the polymerized scale to heighten the cleaning effect of the chemical detergent solution comprising soap builder, alkali agent, and surfactant. If the system further contains plastics packing, it is expected that the packing heightens the cleaning effect.

The organic solvent preferably has a solubility parameter (hereinafter called SP) of 10 or less. Examples of organic solvents are tetrahydrofuran (SP: 9.32), acetone (SP: 9.71), methyletyl ketone (SP: 9.04), methyl isobutyl ketone (SP: 9.56), methyl n-butyl ketone (SP: 9.92), methyl n-propyl ketone (SP: 9.98), dioxane (SP: 9.73), toluene (SP: 8.9), benzene (SP: 9.2), xylene (SP: 8.8-9.0), chlorobenzene (SP: 9.5), chloroform (SP: 9.2), ethyl acetate (SP: 9.0), tetrachloroethylene (SP: 9.3) and mixtures thereof. Either water-soluble organic solvents or water-insoluble organic solvents can be used, but water-insoluble solvents are particularly effective, and water-insoluble organic solvents having an SP value of 10 or less are preferable. Among the water soluble solvents having a SP value of 10 or less, more preferable in view of their boiling points and detergency are toluene and xylene, particularly toluene. It is preferable that the specific gravity of the organic solvent is close to that of the chemical detergent comprising soap builder, alkali agent, and surfactant. Toluene and xylene satisfy this requirement, but tetrachloroethylene is rather remote from this requirement.

The polymerizable monomers include styrene, methylacrylate, ethyl acrylate, methyl methacrylate, ethyl methacrylate, and butadiene, among which methyl methacrylate is particularly preferable. Joint use of toluene and methyl methacrylate is also favorable.

In this invention, one, two or more types of soap builder, one, two or more types of alkali agent, one, two or more types of surfactant, and one, two or more types of organic solvent and/or monomer are selectively used.

The mechanism of cleaning i.e. removing stains from metal surfaces has been explained by the following two combined effects:

(1) to pull the stain from the metal surface into the cleaning solution;

(2) to prevent redeposition of the stain by keeping it stable in the cleaning solution.

The effect (1) is explained by the detergent decreasing the interfacial free energy between the stain and metal, and liberating the stain from the metal into the cleaning solution by the mechanical action or the interfacial potential between the stain and metal. The effect (2) is explained by the hydration layer or electric charge given by the detergent absorbed on the metal or stain preventing the redeposition of the stain. In scale removal from the metal surface, it is also true that the soap builder, alkali agent, organic solvent and/or polymerizable monomer, and surfactant effect chemical cleaning by the effects (1) and (2).

Preferable combinations of the soap builder, alkali agent, organic solvent and/or polymerizable monomer, and surfactant are (1) sodium metasilicate, caustic soda, toluene, and semihardened potassium soap of beef tallow fatty acid, (2) sodium metasilicate, caustic soda, toluene, and sodium salt of $\beta$-naphthalene sulfonic acid-formaldehyde condensate, (3) sodium orthosilicate, caustic soda, toluene, and semihardened potassium soap of beef tallow fatty acid, (4) sodium tripolyphosphate, caustic soda, toluene, semihardened potassium soap of beef tallow fatty acid, (5) sodium metasilicate, caustic soda, toluene, alkyldiphenyl ether sodium disulfonate, and polyoxyethylene nonyl phenyl ether, (6) sodium metasilicate, caustic soda, xylene, and sodium dialkylsulfosuccinate, and (7) sodium metasilicate, caustic soda, xylene, and alkyldiphenyl ether sodium disulfonate.

The concentrations of these individual soap builders, alkali agents, and surfactants and quantities of organic solvents and/or monomers to be used although depending upon the type of chemicals used, are: 0.01-50 w/v%, preferably 0.1-30 w/v%, more preferably 0.5-10 w/v% for the soap builder; 0.01-30 w/v%, preferably 0.1-10 w/v%, more preferably 0.5-5 w/v% for the alkali agent; and 0.01-10 w/v%, preferably 0.1-5 w/v%, more preferably 0.3-2 w/v% for the surfactant. The organic solvent and/or polymerizable monomer are used in the proportion of 1:0.01-10, preferably 1:0.1-3, more preferably 1:0.3-1 with respect to the aqueous detergent solution layer. If If the concentration of the soap builder, alkali agent, or surfactant is too low, sufficient cleaning effects cannot be obtained. Even with these concentrations excessively raised, increase of cleaning effects cannot be expected. If the quantity of the organic solvent and/or polymerizable monomer used is too small, sufficient cleaning effects cannot be obtained. Even with these quantities excessively raised, the increase of cleaning effect cannot be expected.

The soap builder, alkali agent, and surfactant are completely dissolved in water. In very rare case, however, some may remain undissolved. In such a case, it is required to stir them to disperse them uniformly. If the organic solvent is water soluble, the organic solvent and/or polymerizable monomer are dissolved in this solution. But if the organic solvent is water insoluble, the organic solvent and/or polymerizable monomer are separated into two layers from the aqueous solution. In such a case, it is necessary to disperse them uniformly in the aqueous solution by means such as agitating.

It is effective for a more complete cleaning to make a second step cleaning, after the first step cleaning, with an addition of an anionic surfactant to prevent reattachment of the scale which has been liberated in the first step. The anionic surfactant used in the second step cleaning includes condensates of naphthalenesulfonic acid and formaldehyde, alkylnaphthalenesulfonate, alkylsulfosuccinate, and alkyldiphenyl ether disulfonate, and particularly preferable are fatty acid salts such as semihardened potassium soap of beef tallow fatty acid.

To add mechanical detergency to the chemical detergency, a plastic packing may be added to the above chemical detergent system and agitate while heating to effect cleaning.

As the plastics packing, those materials generally used in packed columns for example, tellerettes made of polypropylene, ballast saddles made of polypropylene, ballast rings made of polypropylene, cascade mini rings made of polypropylene, and ballast saddles made of polyethylene are preferred. The size of these packings is 0.1-20 cm, preferably 1-10 cm in diameter. The quantity of these packings to be used is 0.1-50 v/v%, preferably 1-30 v/v% based on the total volume of the cleaning solution or dispersion comprising the soap builder, alkali agent, surfactant, water, organic solvent and/or polymerizable monomer.

The material of the polymerization reactor, agitator, and baffle-plates may be metal such as stainless steel (SUS 304, 316, 316L, etc.) or glass lined steel. For glass lined steel, however, special consideration may be necessary, in case the resistance against alkali may be insufficient.

The feed of the detergent system into the polymerization reactor may be in the order of water and then the detergent system, or vice versa. Also, the aqueous detergent solution may be prepared in a vessel other than the polymerization reactor and fed into the reactor with a pump. Since the inside of the polymerization reactor may be filled with the vapor of the organic solvent and/or that of monomer, it is preferable to make safety provision such as replacing with nitrogen.

The aqueous detergent solution or dispersion is held at a temperature of 100°C or less, preferably at 40-90°C by means of the jacket and/or heating coil of the polymerization reactor, and suitably agitated by an agitator to effect chemical cleaning. Cleaning time is 0.1-96 hours, preferably 0.2-48 hours for the first cleaning step, and 0.1-72 hours, preferably 0.2-24 hours for the second cleaning step. Since no continuous monitoring is required during cleaning, such method as leaving the reactor agitated under heating overnight or a whole day and night is favorably performed.

According to the cleaning method of the present invention, scale deposited on the interior of a polymerization reactor, particularly deposited on the inside surface of the reactor, agitator, and baffle-plates during polymerization can be completely removed.

It is preferable to apply to the inside surfaces of the reactor, agitator, and baffle-plates, for example, a scale deposition preventing agent having a chelate forming function, but this is not mandatory. A polymerization reactor to which has been applied a scale deposition preventing agent gives more remarkable chemical cleaning effect than a reactor to which it has not been applied.

Examples of the invention are now described with respect to emulsion and suspension polymerization systems. Polymerization systems which contains acrylic ester monomer, methacrylic ester monomer, or a mixture thereof are especially adapted to the method of this invention and described in detail.

Example 1

The surface of a test piece 20 mm wide and 100 mm long made of stainless steel (SUS 304) #400 buff finished was further subjected to electropolishing. Into a lidded 1-ℓ glass reactor, 560 ml of styrene-butadiene copolymer latex (solid content 30%), 320 ml of deionized water, 0.012 g of sodium ethylenediaminetetraacetate, 0.003 g of ferrous sulfate, and 0.2 g of rongalite were put. The inside temperature was adjusted to 60°C, and after adding 60 ml of potassium sulfate solution (6.5% aqueous solution), 75 ml of methyl methacrylate containing 0.15 g of cumene hydroperoxide was added in 25-ml section every 30 min and polymerized for 3 hours. Then, 0.3 g of cumene hydroperoxide was added and polymerized one hour. Here, the above test piece was immersed in the latex to deposit scales on the surface of the test piece. The test piece with the scales deposited on was dried at 80°C for one hour, and the polymerization operation was repeated once more. After drying at 80°C for one hour again, the test piece was dried it 100°C for further one hour.

A scale peeling test was conducted in such a manner that the obtained test piece with scales deposited thereon was immersed in a 4-ℓ stainless steel bath containing the soap builder, alkali agent, organic solvent, polymerizable monomer, and surfactant. The test conditions and results are shown in Table 1.

Table I

EP 0 248 681 B1

| | Experimental No.<br>Item | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|---|
| Soap builder | Sodium metasilicate | (w/w%) | 4.0 | 4.0 | 4.0 | 10.0 | 1.0 | | | 2.0 | | | | | 4.0 | 4.0 | 4.0 | 1.0 | 4.0 | 4.0 | 4.0 | 4.0 | 20.0 | 4.0 | 4.0 |
| | Sodium orthosilicate | (w/w%) | | | | | | 4.0 | | | | | | | | | | | | | | | | | |
| | Sodium silicate | (w/w%) | | | | | | | 4.0 | | | | | | | | | | | | | | | | |
| | Sodium orthophosphate | (w/w%) | | | | | | | | | 2.0 | | | | | | | | | | | | | | |
| | Sodium pyrophosphate | (w/w%) | | | | | | | | | | 2.0 | | | | | | | | | | | | | |
| | Sodium tripolyphosphate | (w/w%) | | | | | | | | | | | 2.0 | | | | | | | | | | | | |
| | Sodium hexametaphosphate | (w/w%) | | | | | | | | | | | | 2.0 | | | | | | | | | | | |
| Alkali agent | Caustic soda | (w/w%) | 1.0 | 1.0 | 1.0 | 1.0 | 0.1 | 1.0 | 1.0 | 1.0 | 1.0 | 1.0 | 1.0 | 1.0 | | | 1.0 | 1.0 | 1.0 | 1.0 | 1.0 | 1.0 | 1.0 | 1.0 | 1.0 |
| | Sodium carbonate | (w/w%) | | | | | | | | | | | | | 1.0 | | | | | | | | | | |
| | Sodium bicarbonate | (w/w%) | | | | | | | | | | | | | | 1.0 | | | | | | | | | |
| Organic solvent, monomer | Benzene    Organic layer:water layer<br>(vol:vol) | | 1:1 | | | | | | | | | | | | | | | | | | | | | | |
| | Toluene | (vol:vol) | | 1:1 | | | | 1:1 | 1:1 | 2:1 | 1:1 | 1:1 | 1:1 | 1:1 | 1:1 | 1:1 | 1:2 | 1:1 | 1:1 | 1:1 | 1:1 | 1:1 | 1:1 | 1:1 | 1:1 |
| | Xylene | (vol:vol) | | | 1:1 | | | | | | | | | | | | | | | | | | | | |
| | Tetrachloroethylene (Perclene)<br>(vol:vol) | | | | | 1:1 | | | | | | | | | | | | | | | | | | | |
| | Methyl methacrylate | (vol:vol) | | | | | 1:1 | | | | | | | | | | | | | | | | | | |

| Surfactant | Item | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|
| | Experimental No. | | | | | | | | | | | | | | | | | | | | | | | | |
| Anionic | Semihardened potassium soap of beef tallow fatty acid | (W/V%) | 0.5 | 0.5 | 0.5 | 0.5 | 0.5 | 0.5 | 0.5 | 0.5 | 0.5 | 0.5 | 0.5 | 0.5 | 0.5 | 0.5 | | | | | | | | | |
| | Sodium salt of β-naphthalene-sulfonic acid-formaldehyde condensate | (W/V%) | | | | | | | | | | | | | | | 0.5 | | | | | | | | |
| | Sodium alkylnaphtalene-sulfonate | (W/V%) | | | | | | | | | | | | | | | | 0.5 | | | | | | | |
| | Sodium dialkylsulfosuccinate | (W/V%) | | | | | | | | | | | | | | | | | 0.5 | | | | | | |
| | Sodium alkyldiphenyl ether disulfonate | (W/V%) | | | | | | | | | | | | | | | | | | 0.5 | | | | | |
| Nonionic | Polyoxyethylene nonylphenyl ether A* | (W/V%) | | | | | | | | | | | | | | | | | | | 0.5 | | | | |
| | Polyoxyethylene nonylphenyl ether B** | (W/V%) | | | | | | | | | | | | | | | | | | | | 0.5 | | | |
| | Polyoxyethylene derivative | (W/V%) | | | | | | | | | | | | | | | | | | | | | 0.5 | | |
| Ampholytic | Lauryl betaine | (W/V%) | | | | | | | | | | | | | | | | | | | | | | 0.5 | |
| | Lauryldimethylamine oxide | (W/V%) | | | | | | | | | | | | | | | | | | | | | | | 0.5 |
| | Treating temperature | (°C) | 60 | 60 | 60 | 60 | 60 | 60 | 60 | 60 | 60 | 60 | 60 | 60 | 60 | 60 | 60 | 60 | 60 | 60 | 60 | 70 | 60 | 60 | 60 |
| | Time required for natural peeling off of scales | (Hr.) | 0.2 | 0.2 | 0.3 | 1.0 | 1.0 | 0.3 | 0.3 | 0.3 | 0.3 | 0.5 | 0.3 | 0.3 | 0.5 | 0.5 | 0.2 | 0.5 | 0.5 | 0.5 | 0.5 | 0.5 | 0.5 | 0.5 | 0.5 |

\* EMULGEN 909 made by Kao Soap Co.

\*\* EMULGEN 910 made by Kao Soap Co.

## Example 2

A scale deposition preventing agent of a quinone-amine compound was applied to the inside surfaces, an agitator shaft and blades, and baffle-plates of a 3-ℓ stainless steel polymerization reactor with agitator,

EP 0 248 681 B1

and dried. In the reactor, methyl methacrylate was graft polymerized to styrene-butadiene copolymer latex. After 12 repetitions of the polymerization, a thin deposit of the polymer scale was found on the inside walls when the polymer latex was taken out. After washing the scales with water,a chemical cleaning was applied to the scales with the following cleaning chemicals:

| Cleaning chemicals | Concentrations (w/v%) |
|---|---|
| Sodium metasilicate ($Na_2 SiO_3 \cdot 9H_2 O$) | 4. 0 |
| Caustic soda (NaOH) | 1. 0 |
| Semihardened potassium soap of beef tallow fatty acid (anionic surfactant) | 0. 5 |
| Toluene | 1 : 1 |
| Toluene layer:water layer (vol:vol) | |

Cleaning chemicals were agitated at 65°C for 6 hours. All the scales deposited on the inside walls were naturally peeled off.

Example 3

In a 100-ℓ stainless steel polymerization reactor with agitator, styrene and butadiene were emulsion polymerized to give styrene-butadiene copolymer latex. To this methyl methacrylate was graft polymerized. After polymerization, polymer scales were found deposited on the surfaces inside walls of the reactor, an agitator, and baffle-plates when the polymer latex was taken out. After washing of the scales with water, the first step cleaning was conducted with the cleaning solution of the following composition with polypropylene tellerette (dia. 4.5 cm) added in a quantity of 10 v/v% based on the total cleaning solution.

| Cleaning chemicals | Concentration (w/v%) |
|---|---|
| Sodium metasilicate ($Na_2 SiO_3 \cdot 9H_2 O$) | 4. 0 |
| Caustic soda (NaOH) | 1. 0 |
| Sodium salt of $\beta$-naphthalenesulfonic acid-formaldehyde condensate (anionic surfactant) | 0. 5 |
| Toluene | 1 : 1 |
| Toluene layer: water layer (vol:vol) | |

After agitating the cleaning chemicals at 80°C for 6 hours, further agitated for 6 hours at 60°C with an addition of 0.5 w/v% based on the water layer of semihardened potassium soap of beef tallow fatty acid. As a result all the scales deposited on the inside walls of the reactor, an agitator, and baffle-plates were naturally peeled off.

Comparative Example 1

A scale deposition preventing agent of a quinone-amine compound was applied to the inside surfaces, an agitator shaft and blades, and baffle-plates of a 3-ℓ stainless steel polymerization reactor with agitator, and dried. Then, in the reactor, methyl methacrylate was graft polymerized to styrene-butadiene copolymer latex. After 12 repetitions of the polymerization, a thin deposit of the polymer scale was found on the inside walls when the polymer was taken out. After washing the scales with water, chemical cleaning was applied to the scales with the following cleaning chemicals:

| Cleaning chemicals | Concentration (w/v%) |
|---|---|
| Sodium metasilicate ($Na_2 SiO_3 \cdot 9H_2 O$) | 4. 0 |
| Caustic soda (NaOH) | 1. 0 |
| Semihardened potassium soap of beef tallow fatty acid (anionic surfactant) | 0. 5 |

The cleaning chemicals were agitated at 85°C for 6 hours. About 2/3 of the scales deposited on the inside walls were naturally peeled off, but remaining 1/3 was not peeled unless tap water is jetted thereon from the hose.

8

Comparative Example 2

In a 100-ℓ stainless steel polymerization reactor with agitator, styrene and butadiene were emulsion polymerized to prepare styrene-butadiene copolymer latex. To this, methyl methacrylate was further graft polymerized. After polymerization, polymer scales were found deposited on the inside walls of the reactor, an agitator, and baffle-plates when the polymer latex was taken out.

After washing of scales with water, a chemical cleaning was applied with cleaning chemicals of the following composition:

| Cleaning chemicals | Concentration (w/v%) |
|---|---|
| Sodium metasilicate ($Na_2SiO_3 \cdot 9H_2O$) | 4.0 |
| Caustic soda (NaOH) | 1.0 |
| Sodium salt of $\beta$-naphthalenesulfonic acid-formaldehyde condensate (anionic surfactant) | 0.5 |

After agitating the cleaning chemicals at 80°C for 6 hours, further agitated 6 hours at 60°C with an addition of semihardened potassium soap of beef tallow fatty acid to a quantity of 0.5 w/v% based on the quantity of water layer. A part of the scales deposited on the inside surface of the reactor was naturally peeled off from the wall surface, but remaining scales were not peeled off unless tap water was jetted thereon from the hose.

Comparative Example 3

In a 100-ℓ stainless steel polymerization reactor with agitator, styrene and butadiene were emulsion polymerized to give styrene-butadiene copolymer. To this, methyl methacrylate was further graft polymerized. After polymerization, polymer scales were found deposited on the inside walls of the reactor when the polymer latex was taken out.

After washing of scales with water, chemical cleaning was applied with cleaning chemicals of the following composition:

| Cleaning chemicals | Concentration (w/v%) |
|---|---|
| Sodium metasilicate ($Na_2SiO_3 \cdot 9H_2O$) | 4.0 |
| Caustic soda (NaOH) | 1.0 |
| Sodium salt of $\beta$-naphthalenesulfonic acid-formaldehyde condensate (anionic surfactant) | 0.5 |
| Toluene | 1:1 |
| Toluene layer : water layer (vol:vol) | |

After being agitated at 80°C for 6 hours, the cleaning chemicals were further agitated 6 hours at 60°C with an addition of semihardened potassium soap of beef tallow fatty acid to a quantity of 0.5 w/v% based on the quantity of water layer. As a result, the most part of the scales deposited on the inside surfaces of the reactor was naturally peeled off from the wall surface, but the remaining scales was not peeled off unless tap water was jetted thereon from the hose.

Example 4

Into a 5-ℓ stainless steel polymerization reactor with agitator, 1.5 ℓ of water and 1.5 kg of styrene monomer were fed, and, by use of 0.3 parts (PHR) of benzoyl peroxide as an initiator and 0.1 part (PHR) of polyvinyl alcohol as a dispersant, the styrene was suspension polimerized by agitating at 85°C for 8 hours. When the polymer latex was taken out after polymerization had been completed, polymer scales were found deposited around the gas-liquid interface.

Chemical cleaning was applied with the cleaning chemicals in the following Table:

| Cleaning chemicals | Concentration (w/v%) |
|---|---|
| Sodium metasilicate ($Na_2SiO_3 \cdot 9H_2O$) | 4. 0 |
| Caustic soda (NaOH) | 1. 0 |
| Semi-hardened potassium soap of beef tallow fatty acid (anionic surfactant) | 0. 5 |
| Toluene | 1 : 1 |
| Toluene layer : water layer (vol:vol) | |

The cleaning chemicals were agitated at 65°C for 6 hours. As a result, most part of the scales deposited on the inside walls of the reactor were peeled off, and the rest of the scales were also readily peeled off by tap water jetted thereon from the hose.

Example 5

Into a 3-ℓ polymerizing reactor made of stainless steel with an agitator, 1.0 ℓ of water and 1.0 kg of vinylchloride monomer were fed, and by use of sodium lauryl sulfate and in the presence of a redox catalyst comprising hydrogen peroxide and sodium sulfite, the vinyl chloride was emulsion polymerized. When the polymer latex was taken out after polymerization had been complete, polymer scales were found deposited on the inside walls of the reactor.

Chemical cleaning was applied with the following cleaning chemicals:

| Cleaning chemicals | Concentration (w/v%) |
|---|---|
| Sodium metasilicate ($Na_2SiO_3 \cdot 9H_2O$) | 4. 0 |
| Caustic soda (NaOH) | 1. 0 |
| Semi-hardened potassium soap of beef tallow fatty acid (anionic surfactant) | 0. 5 |
| Toluene | 1 : 1 |
| Toluene layer : water layer (vol:vol) | |

The cleaning chemicals were agitated at 65°C for 6 hours. As a result, the most part of the scales deposited on the walls of the reactor were peeled off, and the rest of the scales were also readily peeled off by tap water jetted thereon from the hose.

Example 6

Into a 3-ℓ polymerization reactor made of stainless steel with an agitator, 1.5 ℓ of water, 500 g of acrylonitrile, and 500 g of vinyl chloride were fed, and by use of 0.3 parts (PHR) of potassium persulfate as an initiator and in the presence of 0.05 parts of sodium alkylbenzene sulfonate as a surfactant, the acrylonitrile and vinyl chloride were emulsion polymerized. When the polymer latex was taken out after the polymerization had been completed, polymer scales were found deposited on the inside walls of the reactor.

Chemical cleaning was applied with the cleaning chemicals in the following table.

| Cleaning chemicals | Concentration (w/v%) |
|---|---|
| Sodium metasilicate ($Na_2SiO_3 \cdot 9H_2O$) | 4. 0 |
| Caustic soda (NaOH) | 1. 0 |
| Semi-hardened potassium soap of beef tallow fatty acid (anionic surfactant) | 0. 5 |
| Toluene | 1 : 1 |
| Toluene layer : water layer (vol:vol) | |

The cleaning chemicals were agitated at 65°C for 6 hours. As a result, the scales deposited on the inside walls of the reactor were readily peeled off when tap water was jetted thereon from the hose.

Example 7

Into a 3-ℓ stainless steel polymerization reactor with agitator, 1.5 ℓ of water, 1.0 kg of vinyl chloride

10

monomer were fed, and by use of 0.04 parts (PHR) polyvinyl alcohol as a dispersant and 0.3 parts (PHR) lauroyl peroxide as an initiator, the vinyl chloride was suspension polymerized. When the polymer suspension was taken out from the reactor after the polymerization had been completed, polymer scales were found deposited on the inside walls of the reactor.

Chemical cleaning was applied by use of the cleaning chemicals shown in the following table:

| Cleaning chemicals | Concentration (w/v%) |
| --- | --- |
| Sodium metasilicate ($Na_2SiO_3 \cdot 9H_2O$) | 4. 0 |
| Caustic soda (NaOH) | 1. 0 |
| Semi-hardened potassium soap of beef tallow fatty acid (anionic surfactant) | 0. 5 |
| Toluene | |
| Toluene layer : water layer (vol:vol) | 1 : 1 |

The cleaning chemicals were agitated at 65ºC for 6 hours. As a result, the most part of the scales deposited on the inside walls of the reactor were naturally peeled off, and remaining scales were also readily peeled off by tap water jetted from hose.

## Claims

1. A method of cleaning the interior of a polymerization reactor which has been used for the emulsion or suspension polymerization of one or more monomers in the presence of an initiator, the method comprising contacting the interior of the reactor with a chemical detergent system comprising:

from 0.01 to 50 w/v% of at least one soap builder,

from 0.01 to 30 w/v% of at least one alkali agent,

from 0.01 to 10 w/v% of a surfactant as an aqueous solution or dispersion thereof and

an organic solvent and/or polymerizable monomer in ratio of solvent/monomer to aqueous detergent solution layer of 1:0.01 to 10,

cleaning being carried out at 100°C or less for 0.1 to 96 hours in a first cleaning step and for 0.1 to 72 hours in a second cleaning step.

2. A method according to claim 1, wherein the soap builder is at least one of sodium metasilicate, potassium metasilicate, sodium orthosilicate or potassium orthosilicate.

3. A method according to claim 1 or claim 2, wherein the alkali agent is at least one of caustic soda, caustic potash, sodium carbonate, potassium carbonate, sodium bicarbonate or potassium bicarbonate.

4. A method according to any preceding claim, wherein the surfactant is an anionic or nonionic surfactant.

5. A method according to any preceding claim, comprising the step of agitating the chemical detergent system in the presence of a plastics packing.

6. A method according to claim 5, wherein the plastics packing is at least one of tellerettes, ballast saddles, ballast rings or cascade mini rings and is made of polypropylene or polyethylene.

7. A method according to claim 5 or claim 6, wherein the quantity of plastics packing is 0.1-50 v/v% based on the chemical detergent system.

8. A method according to any preceding claim, when used to clean the inside walls, agitator and baffle-plates of a polymerization reactor.

## Patentansprüche

1. Verfahren zur Reinigung des Innenraums eines Polymerisationsreaktors, welcher für die Emulsions- oder Suspensionspolymerisation eines oder mehrerer Monomeren in Gegenwart eines Initiators verwendet worden ist, wobei das Verfahren das Kontaktieren des Innenraums des Reaktors mit einem chemischen Detergenziensystem, umfassend:

0,01 bis 50 Gew./Vol.-% mindestens eines Seifenbuilders,

0,01 bis 30 Gew./Vol.-% mindestens eines alkalischen Mittels,

0,01 bis 10 Gew.-/Vol.-% eines oberflächenaktiven Mittels in Form einer wäßrigen Lösung oder Dispersion hiervon und

ein organisches Lösungsmittel und/oder polymerisierbares Monomer in einem Verhältnis von Lösungsmittel/Monomer zu wäßriger Detergenzienlösungsschicht von 1:0,01 bis 10 umfaßt,

wobei die Reinigung bei 100°C oder weniger während 0,1 bis 96 Stunden in einer ersten Reinigungsstufe und während 0,1 bis 72 Stunden in einer zweiten Reinigungsstufe durchgeführt wird.

2. Verfahren nach Anspruch 1, wobei der Seifenbuilder mindestens einer aus Natriummetasilikat, Kaliummetasilikat, Natriumorthosilikat oder Kaliumorthosilikat ist.

3. Verfahren nach Anspruch 1 oder 2, wobei das alkalische Mittel mindestens eines aus Natriumhydroxid, Kaliumhydroxid, Natriumcarbonat, Kaliumcarbonat, Natriumbicarbonat oder Kaliumbicarbonat ist.

4. Verfahren nach einem der vorangehenden Ansprüche, wobei das oberflächenaktive Mittel ein anionisches oder nichtionisches oberflächenaktives Mittel ist.

5. Verfahren nach einem der vorangehenden Ansprüche, umfassend die Stufe des Rührens des chemischen Detergenziensystems in Gegenwart einer Kunststoffpackung.

6. Verfahren nach Anspruch 5, wobei die Kunststoffpackung mindestens eine aus tellerförmigen Füllkörpern (Telleretten), Ballast-Sattelkörpern. Ballastringen oder Kaskadenminiringen und aus Polypropylen oder Polyethylen hergestellt ist.

7. Verfahren nach Anspruch 5 oder 6, wobei die Menge der Kunststoffpackung 0,1-50 V/V-%, bezogen auf das chemische Detergenziensystem, beträgt.

8. Verfahren nach einem der vorangehenden Ansprüche bei der Verwendung zur Reinigung der Innenwände, des Rührers und der Ablenkplatten eines Polymerisationsreaktors.

**Revendications**

1. Procédé pour le nettoyage de l'intérieur d'un réacteur de polymérisation, lequel a été utilisé pour la polymérisation en émulsion ou en suspension d'un ou plusieurs monomères en présence d'un initiateur, le procédé comprenant la mise en contact de l'intérieur du réacteur avec un système détergent chimique comprenant :
   - de 0,01 à 50% en p/v d'au moins un adjuvant pour savon;
   - de 0,01 à 30% en p/v d'au moins un agent alcalin ;
   - de 0,01 à 10% en p/v d'un agent tensio-actif, se présentant sous la forme d'une solution aqueuse ou d'une dispersion aqueuse de celui-ci ; et
   - un solvant organique et/ou un monomère polymérisable dans un rapport du solvant/monomère à la couche de solution aqueuse de détergent de 1:0,01 à 10 ;

   le nettoyage étant effectué à 100°C, ou au-dessous, pendant un laps de temps de 0,1 à 96 heures, dans une première étape de nettoyage, et pendant un laps de temps de 0,1 à 72 heures dans une seconde étape de nettoyage.

2. Procédé selon la revendication 1, dans lequel l'adjuvant pour savon est au moins l'un parmi le métasilicate de sodium, le métasilicate de potassium, l'orthosilicate de sodium ou l'orthosilicate de potassium.

3. Procédé selon la revendication 1 ou la revendication 2, dans lequel l'agent alcalin est au moins l'un parmi la soude caustique, la potasse caustique, le carbonate de sodium, le carbonate de potassium, le bicarbonate de sodium ou le bicarbonate de potassium.

4. Procédé selon l'une quelconque des revendications précédentes, dans lequel l'agent tensio-actif est un agent tensio-actif anionique ou non-ionique.

5. Procédé selon l'une quelconque des revendications précédentes, comprenant l'étape d'agitation du système détergent chimique en présence d'un garnissage de matière plastique.

6. Procédé selon la revendication 5, dans lequel le garnissage de matière plastique est au moins l'un parmi les "tellerettes", les selles de ballast, les anneaux de ballast ou les mini-anneaux en cascade et est fait de polypropylène ou de polyéthylène.

7. Procédé selon la revendication 5 ou la revendication 6, dans lequel la quantité de garnissage de matière plastique est de 0,1-50% en v/v sur la base du système détergent chimique.

8. Procédé selon l'une quelconque des revendications précédentes, pour nettoyer les parois intérieures, l'agitateur et les plaques de chicane d'un réacteur de polymérisation.